# EUROPEAN PATENT SPECIFICATION

(11) **EP 1 391 367 B1**
(45) Date of publication and mention of the grant of the patent: **05.03.2008**
(21) Application number: 03255046.9
(22) Date of filing: 14.08.2003
(51) Int. Cl.: B62D 1/184, B62D 1/18

(54) **Vehicle steering assembly**
Fahrzeuglenkung
Direction de véhicule

(30) Priority: 14.08.2002 GB 0218824
(43) Date of publication of application: 25.02.2004
(73) Proprietor: TRW LucasVarity Electric Steering Ltd., Solihull, West Midlands B90 4AX (GB); Lucas Automotive GmbH, 56070 Koblenz (DE)
(72) Inventor: Appleyard, Michael, Solihull, West Midlands B92 7DZ (GB); Op den Camp, Eckart, 56073 Koblenz (DE)
(74) Representative: Tranter, Andrew David

(56) References cited:
- WO-A-99/07592
- DE-A- 19 643 203
- US-A- 4 142 423
- PATENT ABSTRACTS OF JAPAN vol. 2002, no. 11, 6 November 2002 (2002-11-06) & JP 2002 195292 A (TORRINGTON CO:THE), 10 July 2002 (2002-07-10)

## Description

This invention relates to an improved steering assembly for a road vehicle such as a passenger car. It in particular relates to a steering assembly of the electric power assisted steering (EPAS) type.

EPAS assemblies include an electric motor, which acts through a gearbox and optionally a clutch to apply an assistance torque to a steering shaft of a vehicle. The driver turns the steering shaft by applying a torque to a steering wheel, which is transferred to the steering shaft. The assistance torque applied by the motor acts to help the driver to turn the steering wheel, reducing the effort required for steering the vehicle.

The steering shaft and the motor need to be held accurately, in a fixed position relative to one another, during normal operation of the vehicle. However, in the event of an accident involving a rapid deceleration of the vehicle it is desirable for the steering assembly to collapse allowing the steering wheel to move towards the front of the vehicle under the weight of the driver. This has, in the past, been achieved in many ways. In one arrangement, the steering shaft is manufactured as a single component with weakenings along its length permitting it to collapse axially by a controlled deformation as a force is applied to the steering wheel. In an alternative, it is known to provide a two-part steering shaft in which one part slides axially over the other as a force is applied to the steering wheel.

As well as allowing the steering shaft to collapse, it is essential to permit the shroud, which encloses and supports the shaft to collapse. An example of such an arrangement is taught in our earlier application No. GB 9716747.2. In the assembly described in that application, the shroud is provided in two sections with one section sliding into the other. To locate the steering shaft the lower section (furthest from the steering wheel) has two annular bearings, which support the steering shaft at spaced locations.

In some applications, typically on higher specification vehicles, it is also desirable for the steering wheel to be adjustable both for rake and for reach. Reach adjustment requires axial movement of the steering wheel away from or towards the driver. Such a range of adjustment permits the driver to obtain a more comfortable driving position. This further complicates the design of the steering assembly.

In many cases, there is often a very limited space within which the collapsible assembly can be located. At least part of this space may be taken up by the electric motor and its housing, which makes the provision of adequate crash protection a more demanding challenge than on a more traditional non-assisted steering system.

In accordance with document DE 19643203 A1 a steering assembly for a vehicle is provided, comprising:
a hollow guide portion;
a steering column extending through the guide portion;
a clamping mechanism having a handle; and
a bracket adapted to be fixed to the vehicle;
in which the clamping mechanism includes a pair of profiled parts so shaped as to convert rotational movement of the handle into linear movement of a portion of the clamp mechanism which is used to clamp and unclamp the guide portion from the bracket, whereby upon rotation of the handle in a first sense, the mechanism clamps the guide portion to the bracket and unclamps on rotation of the handle in a second, opposite, sense.

This provides a steering assembly that may be clamped to and unclamped from a vehicle such that, for example, its position relative to the vehicle may be changed.

In accordance with first aspect of the invention, we provide a steering assembly for a vehicle wherein, advantageously, both the clamping and the unclamping force is produced by rotation of the profiled parts rather than using some other means to generate force. The force is therefore directly controlled by the user rotating the handle.

Conveniently, the pair of profiled parts comprises first and second threaded members, the second threaded member being threaded with a complementary thread to the first. Conveniently, rotation of the handle (typically in the second sense) causes rotation of the first threaded member, which is then forced to move linearly by the action of the threads.

In a most advantageous embodiment, the threaded members are threaded with a fast thread. By fast thread, we mean a thread with a wide pitch whereby the clamping mechanism may be released with a relatively small rotational movement of the handle.

In an alternative embodiment, the pair of profiled parts comprises first and second ramped members. The first ramped member may be operatively secured to the handle. The second ramped member may be operatively attached to the guide portion. Rotation of the handle may cause ramped portions of each ramped member to coincide and force the ramped members apart. This may occur on rotation of the handle in the first sense and may cause the clamping mechanism to clamp the guide portion to the bracket.

The clamping mechanism may comprise a pin extending outwards away from the steering column through the guide portion, on which the handle is mounted. The pin may be secured to the guide portion by means of a head of the pin. The pin may be the first threaded member, in which case the clamping mechanism may include as the second threaded member a threaded shaft in which the pin may rotate. Alternatively, an intermediate member may engage the pin and form the first threaded member with the clamping mechanism including as the second threaded member a threaded shaft in which the intermediate member may rotate.

The clamping mechanism may be so arranged such that rotation of the handle in the first sense causes a force to be exerted on the pin in a direction outwards away from the steering column. Typically, this is achieved by the first ramped member of the first pair of profiled members forcing the pin away from the bracket.

Conveniently, the bracket may be formed with a slot generally perpendicular to the axis of the steering column along which the clamping mechanism and so the guide portion and steering column may travel. Accordingly, this allows adjustment of the rake of the steering assembly. A small rubber moulding may also be inserted at each end of the slot in the bracket to provide "soft stops" which prevent a loud impact noise at the extremes of adjustment.

The steering column may be telescopic, having at least and upper part and a lower part, the upper part co-operating with the lower part. Advantageously, this may allow collapse of the steering assembly in case of an accident. In such a telescopic case, the assembly may be provided with a hollow upper shroud, which fits at least partially within the guide portion and extends away from the guide portion where the two parts of the steering column extending through the guide portion and the upper shroud portion. Fixing means such as pinch bolts may secure the shroud relative to the guide portion.

The clamping mechanism may, on clamping of the guide portion, clamp the upper shroud. This may provide for adjustment of the position of the shroud relative to the guide portion and therefore the overall length or reach of the steering assembly. The pin may extend into and may be secured to the shroud. The head of the pin may engage a rail formed onto the shroud, the rail defining a slot running in the axial direction of the steering column. This permits the collapse of the column in the event of an accident.

The clamping mechanism may further comprise a toothed body, which is secured to the shroud, where a block attached to the head of the pin is formed with teeth complementary to the toothed body. Accordingly, on rotation of the handle in the first sense, the teeth of the pin and the toothed channel engage and clamp the shroud and guide portion to the bracket.

The head of the pin may form the first threaded member, with the block forming the second threaded member.

An energy-absorbing member may be provided which connects the upper shroud to the guide portion, the member deforming as the upper shroud is moved further into the guide portion in an accident. This may conveniently comprise a metal strip, which is secured to the fixing means and hooks over a lower end of the upper shroud. As the shroud moves into the guide portion the strip is bent which absorbs energy.

Alternatively, the energy-absorbing member may connect the toothed body to the guide portion in such a fashion that, in normal use the toothed body and the shroud are fixed relative to one another but in case of an accident are allowed to move relative to one another in a controlled fashion. Conveniently, the energy-absorbing member may comprise at least one elongate metal strip connected to an end of the toothed body and bent back on itself and along the length of the toothed body such that, on an impact on the steering column, the shroud forces the, or each, metal strip along its length and then to bend.

The width and or the thickness of the, or each strip may vary along its length to control the rate of absorption of energy during collapse of the assembly.

For improved clamping of the bracket relative to guide portion, the bracket and guide portion may be formed with co-operating teeth that engage when the bracket and guide portion are clamped together. This makes the guide portion and bracket less prone to relative movement when clamped.

The assembly preferably comprises a part of an electric power assisted steering assembly. As such, the guide portion may include one or more mounting portions for securing the guide portion to a housing of an electric motor or the housing of a speed reduction gearbox. The guide portion may be rigidly secured to the motor housing. It may, for example, be bolted, welded or otherwise secured to the motor or gearbox housing.

An output shaft of the motor or gearbox may co-operate with a lower end of the lower steering shaft part, which extends from the guide portion into the motor housing. The housing may also accommodate a torque sensor which measures the torque carried by the steering shaft and produces an output signal indicative of torque which is used to at least partially determine the amount of torque applied to the shaft by the motor.

The invention will now be described, by way of example, with reference to the accompanying drawings, in which:-
**Figure 1** is a cross section through the steering assembly of a first embodiment of the invention; and
**Figure 2** is a cross section through the steering assembly of a second embodiment of the invention.

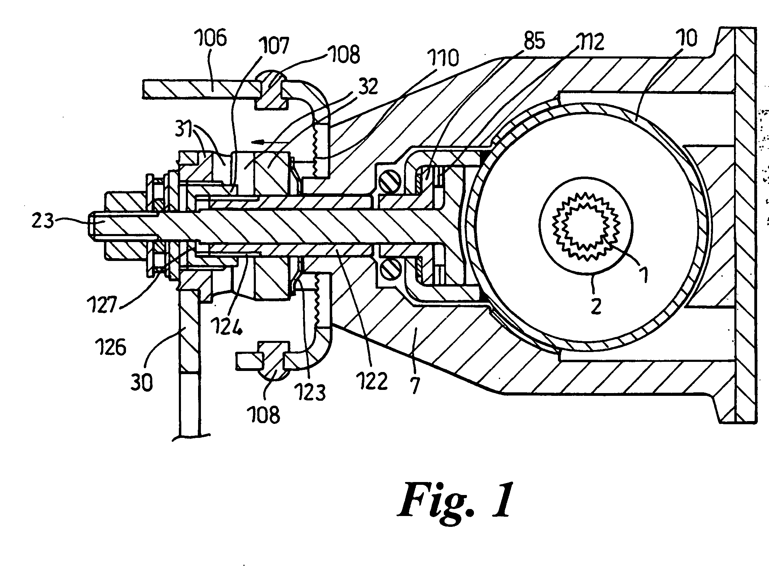

In a first embodiment of a vehicle steering assembly according to the present invention as shown in Figure 1 of the accompanying drawings, a "double adjust" mechanism is used enabling adjustment of both rake and reach of the steering assembly.

This embodiment has a c-shaped guide portion 7 inside which is mounted a generally cylindrical hollow upper shroud 10. A two part telescopic steering column having upper part 2 and lower part 1 is received within the upper shroud 10. Lower part 1 is operatively connected at a lower end (not shown) to the steering mechanism and is splined at an upper end such that it fits slidably within a correspondingly splined hollow cylindrical lower end of upper part 2. An upper end of upper part 2 is connected to the steering wheel (not shown). Upper part 2 is held fixed axially relative to the shroud 10 and lower part 2 is held fixed relative to the guide portion 7 by means of upper and lower bearings, respectively.

The guide portion 7 is fixable relative to the vehicle to which it is fitted, by means of a clamping mechanism as described hereinbelow, to a column bracket 106 fixed to the vehicle body. It is also pivotably connected to the vehicle at a lower position than that shown in Figure 1 of the accompanying drawings.

The clamping mechanism comprises a clamp pin 23 mounted in an elongate slot in the guide portion 7, passing through a cylindrical hollow bush 122. Bush 122 extends away from guide portion 7 and is a push fit thereon. A bush 122 is fixed to the guide portion 7, it may be considered part of the guide portion 7. Guide portion 7 extends through an elongate channel 18 formed in the centre of the "c" of the guide portion 7 and through a slot in a rail 19 welded to the upper shroud 10.

A clamp handle 30, having a moving cam 31 formed into it, is mounted on the end of the clamp pin 23 distal to the upper shroud 10. The moving cam 31 co-operates with a fixed cam 32 mounted on the bush 122 and made non-rotatable by the engagement of a rectangular boss 28 forming part of guide portion 7. Cams 31, 32 form two opposing ramped members. Thus, when clamp handle 30 is moved to the "clamped" position, the cams 31, 32 force the handle 30 and hence clamp pin 23 to move away from the shroud 10.

The end of the clamp pin 23 closest to the shroud 10 and inside rail 19 is formed with teeth 112 facing away from the shroud. A toothed body 85 is also provided as a sliding fit inside rail 19 and is fixed to it by fusable means. As clamp pin 23 is pulled away from shroud 10, teeth 112 mesh with the teeth of the toothed body 85, clamping toothed body to rail 19, thereby preventing movement of the shroud along its length. Accordingly, the "reach" adjustment is fixed.

Furthermore, fixed cam 32 is formed with teeth 110 on the side opposite that formed with the cam. When the handle is moved to the "clamped" position fixed cam moves against force of cam spring 123 to mesh with teeth formed on column bracket 106. This then fixes movement of the guide portion 7 relative to the column bracket 106 immobilising the "rake" adjustment.

When the handle 30 is moved to the unclamped position, it is necessary for teeth 110 and 112 to disengage from the teeth with which they are meshed. The teeth 110 formed on the fixed cam 32 are forced away by means of cam spring 123, thereby allowing "rake" adjustment. The outside of the end of the bush 122 distal to the guide portion is formed with a fast thread 124. Around this end is fitted a sleeve 107 which is formed with a corresponding fast thread on its interior. The sleeve is positioned such that it is partially within the moving cam 31. The outside of sleeve 107 is serrated, corresponding serrations 126 being formed on the moving cam 31.

Accordingly, when the handle is rotated the moving cam 31, and by transmission of force through the serrations 126, the sleeve 107 also rotates. The fast thread 124 then forces the sleeve 107 to move towards the shroud 10. The clamp pin 23 is formed with a step 127 a small distance along its length from where the sleeve, in the clamped position, sits. When the sleeve 107 moves towards the shroud 10, it engages this step 127 and forces the clamp pin 23 inwards, releasing teeth 112 and allowing "reach" adjustment.

This embodiment also shows "soft stops" 108 positioned on the column bracket 106 for rake adjustment whereby the ends of the travel of the rake adjustment can be felt by a user of the system without collision of the adjustment mechanism with the column bracket 106. These are of the form of rubber pads mounted in the column bracket 106 such that these are impacted by the moving mechanism rather than, as an example and as would occur in the case depicted in Figure 1 of the accompanying drawings, the fixed cam 32.

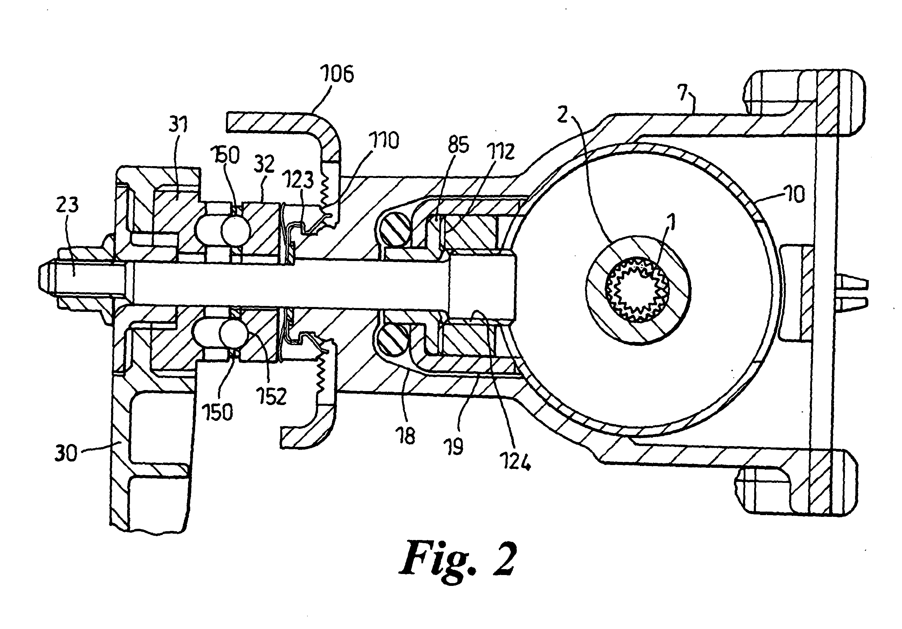

A second embodiment is shown in Figure 2 of the accompanying drawings. This is similar to that shown in Figure 14 but lacking the bush 122 and having the head of the clamp pin 23 closest to the shroud 10 in the form of a separate toothed member 128 attached to pin 23 by a fast thread 124 . Features that are common to the earlier embodiment have been given identical reference numerals.

In this embodiment, the bush 122 has been dispensed with. Pin 23 is rotatably directly mounted in a hole in guide portion 7. Handle 30 is mounted at the end of pin 23 such that the pin 23 rotates with the handle 30 as the handle 30 is rotated due to the engagement of adjusting member 129 with handle 30 via a serrated face 131 and with pin 23 via D-form 130. Moving cam 31 is fixed to handle 30, and has a surface, which cooperates with a corresponding surface of fixed cam 32 fixed to guide post by means of rectangular boss 28. Optionally, to reduce friction, these cams 31, 32 are a ball and recess arrangement as shown, where a plurality of balls 150 formed in the cooperating surface of the moving cam 31 are receivable within corresponding recesses 152 in fixed cam 32. This means as handle 30 is rotated to the clamped position, the pin 23 will rotate and be forced outwards whilst the balls 150 are rising out of recesses 152 and then, once the balls 150 are out of the recesses 152.

The rising tension in pin 23 is due to the combined action of the ball and recess arrangement and the fast thread 124. The relationship between rotation of the handle 30 and the rate of change of tension in pin 23 is a function of the ramped shape or the recesses 152. Pin 23 is maintained in a fixed axial position relative to the guide portion 7 by a secondary function or spring 123 acting as a clip. As handle 30 is rotated to the unclamped position, fast thread 124 ensures that the toothed member 128 moves towards the shroud 10 and that the teeth 112 are therefore positively disengaged.

## Claims

1. A steering assembly for a vehicle comprising:
a hollow guide portion (7);
a steering column extending through the guide portion (7);
a clamping mechanism having a handle (30); and
a bracket (106) adapted to be fixed to the vehicle;
in which the clamping mechanism includes a pair of profiled parts so shaped as to convert rotational movement of the handle (30) into linear movement of a portion of the clamp mechanism which is used to clamp and unclamp the guide portion (7) from the bracket (106), whereby upon rotation of the handle (30) in a first sense, the mechanism clamps the guide portion (7) to the bracket (106) and unclamps on rotation of the handle (30) in a second, opposite, sense, **characterised in that** both the clamping and the unclamping force is produced by rotation of the pair of profiled parts.

2. A steering assembly according to claim 1 in which the pair of profiled parts comprises first and second threaded members (31, 32; 31, 107; 128, 23), the second threaded member being threaded with a complementary thread to the first.

3. A steering assembly according to claim 2 in which the threaded members (31, 32; 31, 107; 128, 23) are threaded with a fast thread (124).

4. A steering assembly according to claim 1 in which the pair of profiled parts comprises first and second ramped members (31, 32).

5. A steering assembly according to claim 4 in which the first ramped member (31) is operatively secured to the handle (30) and the second ramped member (32) is operatively attached to the guide portion (7) such that rotation of the handle (30) causes ramped portions of each ramped member (31, 32) to coincide and force the ramped members (31, 32) apart.

6. A steering assembly according to any preceding claim in which the clamping mechanism comprises a pin (23) extending outwards away from the steering column through the guide portion (7), on which the handle (30) is mounted.

7. A steering assembly according to claim 6 in which the pin (23) comprises a first threaded member and the clamping mechanism includes a threaded shaft (124) in which the pin (23) may rotate as a second threaded member.

8. A steering assembly according to claim 6 or claim 7 in which the clamping mechanism is arranged such that rotation of the handle (30) in the first sense causes a force to be exerted on the pin (23) in a direction outwards away from the steering column.

9. A steering assembly according to any preceding claim in which the bracket (106) is formed with a slot generally perpendicular to the axis of the steering column along which the clamping mechanism, the guide portion (7) and steering column travel.

10. A steering assembly according to any preceding claim in which the steering column is telescopic, having at least an upper part (2) and a lower part (1), the upper part (2) co-operating with the lower part (1).

11. A steering assembly according to claim 10 which is be provided with a hollow upper shroud (10), which fits at least partially within the guide portion (7) and extends away from the guide portion (7) where the two parts of the steering column extending through the guide portion (7) and the upper shroud portion (10).

12. A steering assembly according to claim 11 in which the clamping mechanism, on clamping of the guide portion (7), clamps the upper shroud portion (10).

13. A steering assembly according to claim 11 or claim 12 in which the clamping mechanism further comprises a toothed body (85), which is secured to the shroud (10), where a block (28) attached to the head of the pin (28) is formed with teeth complementary to the toothed body (85).

14. A steering assembly according to any of claims 11 to 13 in which an energy-absorbing member is provided which connects the upper shroud portion (10) to the guide portion (7), the member deforming as the upper shroud portion (10) is moved further into the guide portion (7).

15. A steering assembly according to any preceding claim which comprises a part of an electric power assisted steering assembly.

## Patentansprüche

1. Lenkungsanordnung für ein Fahrzeug, mit:
einem hohlen Führungsabschnitt (7);
einer sich durch den Führungsabschnitt (7) erstreckenden Lenksäule;
einem Klemmmechanismus mit einem Griff (30); und
einer Halterung (106), die an dem Fahrzeug befestigt zu werden vermag;
bei der der Klemmmechanismus ein Paar profilierter Teile aufweist, die derart geformt sind, dass sie eine Drehbewegung des Griffs (30) in eine Linearbewegung eines Abschnitts des Klemmmechanismus umsetzen, der dazu verwendet wird, den Führungsabschnitt (7) an der Halterung (106) festzuklemmen und zu lösen, wodurch bei einer Drehung des Griffs (30) in eine erste Richtung der Mechanismus den Führungsabschnitt (7) an der Halterung (106) festklemmt und bei einer Drehung des Griffs (30) in eine zweite, entgegengesetzte Richtung löst, **dadurch gekennzeichnet, dass** sowohl die Klemmkraft als auch die Lösekraft durch eine Drehung des Paars profilierter Teile erzeugt wird.

2. Lenkungsanordnung nach Anspruch 1,
bei der das Paar profilierter Teile ein erstes und ein zweites Gewindeelement (31, 32; 31, 107; 128, 23) aufweist, wobei das zweite Gewindeelement mit einem zum ersten Gewindeelement komplementären Gewinde versehen ist.

3. Lenkungsanordnung nach Anspruch 2,
bei der die Gewindeelemente (31, 32; 31, 107; 128, 23) mit einem Schnellgewinde (124) versehen sind.

4. Lenkungsanordnung nach Anspruch 1,
bei der das Paar von profilierter Teile ein erstes und ein zweites Rampenelement (31, 32) aufweist.

5. Lenkungsanordnung nach Anspruch 4,
bei der das erste Rampenelement (31) betriebsfähig am Griff (30) befestigt ist und das zweite Rampenelement (32) betriebsfähig am Führungsabschnitt (7) angebracht ist, so dass eine Drehung des Griffs (30) bewirkt, dass rampenförmige Bereiche eines jeden Rampenelements (31, 32) zusammentreffen und die Rampenelemente (31, 32) auseinander zwingen.

6. Lenkungsanordnung nach einem der vorhergehenden Ansprüche,
bei der der Klemmmechanismus einen Stift (23) aufweist, der sich von der Lenksäule durch den Führungsabschnitt (7), an dem der Griff (30) angebracht ist, nach außen erstreckt.

7. Lenkungsanordnung nach Anspruch 6,
bei der der Stift (23) ein erstes Gewindeelement aufweist und der Klemmmechanismus eine Gewindewelle (124) aufweist, in der der Stift (23) sich als ein zweites Gewindeelement drehen kann.

8. Lenkungsanordnung nach Anspruch 6 oder 7,
bei der der Klemmmechanismus so angeordnet ist, dass eine Drehung des Griffs (30) in die erste Richtung bewirkt, dass eine Kraft auf den Stift (23) in eine Richtung nach außen von der Lenksäule weg ausgeübt wird.

9. Lenkungsanordnung nach einem der vorhergehenden Ansprüche,
bei der die Halterung (106) mit einem Schlitz allgemein rechtwinklig zur Achse der Lenksäule ausgebildet ist, entlang der sich der Klemmmechanismus, der Führungsabschnitt (7) und die Lenksäule bewegen.

10. Lenkungsanordnung nach einem der vorhergehenden Ansprüche,
bei der die Lenksäule teleskopartig mit zumindest einem oberen Teil (2) und einem unteren Teil (1) ist, wobei der obere Teil (2) mit dem unteren Teil (1) zusammenarbeitet.

11. Lenkungsanordnung nach Anspruch 10,
die mit einer hohlen oberen Abdeckung (10) versehen ist, die zumindest teilweise in den Führungsabschnitt (7) passt und sich vom Führungsabschnitt (7) weg erstreckt, wo sich die zwei Teile der Lenksäule durch den Führungsabschnitt (7) und den oberen Abdeckungsabschnitt (10) erstrecken.

12. Lenkungsanordnung nach Anspruch 11,
bei der der Klemmmechanismus beim Festklemmen des Führungsabschnitts (7) den oberen Abdeckabschnitt (10) festklemmt.

13. Lenkungsanordnung nach Anspruch 11 oder 12,
bei der der Klemmmechanismus ferner einen Zahnkörper (85) aufweist, der an der Abdeckung (10) befestigt ist, wobei ein am Kopf des Stifts (23) angebrachter Block (28) mit zum Zahnkörper (85) komplementären Zähnen ausgebildet ist.

14. Lenkungsanordnung nach einem der Ansprüche 11 bis 13,
bei der ein energieabsorbierendes Bauteil vorgesehen ist, das den oberen Abdeckungsabschnitt (10) mit dem Führungsabschnitt (7) verbindet, wobei sich das Bauteil verformt sowie der obere Abdeckungsabschnitt (10) weiter in den Führungsabschnitt (7) bewegt wird.

15. Lenkungsanordnung nach einem der vorhergehenden Ansprüche,
die einen Teil einer elektrischen Servolenkungsanordnung bildet.

## Revendications

1. Direction de véhicule comprenant :
une partie de guidage creuse (7) ;
une colonne de direction s'étendant à travers la partie de guidage (7);
un mécanisme de serrage muni d'un levier (30); et
un support (106) adapté pour être fixé au véhicule ;
dans laquelle le mécanisme de serrage comprend une paire de parties profilées formées de sorte à convertir le mouvement de rotation du levier (30) en mouvement linéaire d'une partie du mécanisme de serrage qui est utilisé pour serrer et desserrer la partie de guidage (7) du support (106), ce par quoi lors de la rotation du levier (30) dans un premier sens, le mécanisme de serrage serre la partie de guidage (7) sur le support (106) et le desserre lors de la rotation du levier (30) dans un deuxième sens opposé, **caractérisée en ce que** la force de serrage et de desserrage est produite par la rotation de la paire de parties profilées.

2. Direction selon la revendication 1, dans laquelle la paire de parties profilées comprend des premier et deuxième éléments filetés (31, 32 ; 31, 107 ; 128, 23), le deuxième élément fileté étant doté d'un filetage complémentaire au premier.

3. Direction selon la revendication 2, dans laquelle les éléments filetés (31, 32 ; 31, 107 ; 128, 23) sont filetés avec un filetage rapide (124).

4. Direction selon la revendication 1, dans laquelle la paire de parties profilées comprend des premier et deuxième éléments à rampe (31, 32).

5. Direction selon la revendication 4, dans laquelle le premier élément à rampe (31) est fixé de manière fonctionnelle au levier (30) et le deuxième élément à rampe (32) est fixé de manière fonctionnelle à la partie de guidage (7) de sorte que la rotation du levier (30) provoque la coïncidence des parties à rampe de chaque élément à rampe (31, 32) et la séparation forcée des éléments à rampe (31, 32).

6. Direction selon l'une quelconque des revendications précédentes, dans laquelle le mécanisme de serrage comprend un axe (23) s'étendant vers l'extérieur de la colonne de direction par la partie de guidage (7), sur laquelle le levier (30) est monté.

7. Direction selon la revendication 6, dans laquelle l'axe (23) comprend un premier élément fileté et le mécanisme de serrage comprend un arbre fileté (124) dans lequel l'axe (23) peut tourner comme un deuxième élément fileté.

8. Direction selon la revendication 6 ou 7, dans laquelle le mécanisme de serrage est agencé de sorte que la rotation du levier (30) dans le premier sens provoque l'exercice d'une force sur l'axe (23) vers l'extérieur de la colonne de direction.

9. Direction selon l'une quelconque des revendications précédentes, dans laquelle le support (106) est formé d'une fente généralement perpendiculaire à l'axe de la colonne de direction le long de laquelle se déplacent le mécanisme de serrage, la partie de guidage (7) et la colonne de direction.

10. Direction selon l'une quelconque des revendications précédentes, dans laquelle la colonne de direction est télescopique et présente au moins une partie supérieure (2) et une partie inférieure (1), la partie supérieure (2) co-opérant avec la partie inférieure (1).

11. Direction selon la revendication 10 qui est dotée d'une enveloppe supérieure creuse (10) qui est disposée au moins en partie dans la partie de guidage (7) et s'éloigne de la partie de guidage (7) où les deux parties de la colonne de direction s'étendent par la partie de guidage (7) et la partie d'enveloppe supérieure (10).

12. Direction de guidage selon la revendication 11 dans laquelle le mécanisme de serrage, lors du serrage de la partie de guidage (7), serre la partie d'enveloppe supérieure (10).

13. Direction selon la revendication 11 ou 12 dans laquelle le mécanisme de serrage comprend en outre un corps denté (85), qui est fixé sur l'enveloppe (10), où un bloc (28) fixé à la tête de l'axe (28) est formé de dents complémentaires au corps denté (85).

14. Direction selon l'une quelconque des revendications 11 à 13 dans laquelle il y a un élément d'absorption d'énergie qui relie la partie d'enveloppe supérieure (10) à la partie de guidage (7), l'élément se déformant lorsque la partie d'enveloppe supérieure (10) est déplacée davantage dans la partie de guidage (7).

15. Direction selon l'une quelconque des revendications précédentes, qui comprend une partie d'une direction à assistance électrique.
